# EUROPEAN PATENT APPLICATION

(11) **EP 2 484 229 A1**
(43) Date of publication of application: **08.08.2012**
(21) Application number: 11000971.9
(22) Date of filing: 07.02.2011
(51) Int. Cl.: A23L 1/221, A23L 2/54, A23L 2/02, A23L 1/0528, A23L 1/238, A23L 1/40, A23L 1/48, A23C 9/152, A23C 11/10, A23L 1/314, A23L 1/32, A23L 1/333, B01F 3/04, B01F 5/12

(54) **Liquid seasoning, beverages, method of seasoning food, and seasoned food**

(71) Applicant: Project Japan Inc., Izumo-shi Shimane (JP); Tadashi Kishimoto, Hatsukaichi-shi Hiroshima (JP); Seijitsumura Inc., Niiya Ozu-shi Ehime (JP); Nakamoto Shoji Inc., Hiroshima-shi Hiroshima (JP)
(72) Inventor: Ogawa, Yoshirou, Izumu-shi Shimane (JP); Iwanaga, Mitsuhiko, Uji-shi Kyoto (JP); Aoki, Toshiko, Izumo-shi Shimane (JP)
(74) Representative: Hauck Patent- und Rechtsanwälte

(57) **Abstract**

The present invention provides a liquid seasoning used for seasoning food subjected to processing with a micro-nano bubble generating device, thereby enabling the liquid seasoning to have impregnation to food in a short time, particularly, facilitating impregnation of good flavor and taste compositions other than salt.
The seasoning is either mixed with water having minute bubbles generated with the micro-nano bubble generating device, or it has minute bubbles generated with this device.

## Description

### BACKGROUND OF THE INVENTION

Conventionally, food (for example, meat such as beef, pork, chicken, etc., fish and seafood such as tuna, salmon, cod, scallop, etc., boiled eggs the eggshells removed, various boiled vegetables,) is soaked with liquid seasonings, namely, previously given tastes to then be sold, cooked, or made into a material for processed foods. Further, raw egg or boiled egg is soaked in a liquid seasoning (particularly, a saline solution) to season or give tastes. Moreover, boiled soy bean, a raw material for ham and sausage, pickled "ume" (a Japanese apricot, or plum), herring roe, and, cod roe preserved in salt and red pepper, etc., are subjected to the soaking or impregnation process (i.e., "seasoning before cooking"). Some of vegetables, fruits, and processed foods are processed with the seasoning before cooking.

In case that food or materials are merely soaked with a liquid seasoning, it takes many hours or several days dependent on kinds and sizes of the materials in order to cause the liquid seasoning to fully soak into the food or the materials, resulting in that the cost to season the food or materials is high. Besides, provided tastes and colors of the food or materials are uneven. Further, it is likely that the materials are soaked with the liquid seasoning and then boiled, they become tough or wrinkled, deteriorating deliciousness.

Among the above, salt (for cooking and general use) is comparatively superior in the property of permeation, and the salt, namely, salty taste permeates the inside of a boiled egg with the eggshell almost in one day. However, for example, soy sauce (which includes a large molecule such as amino acid in addition to salt) is poor in the property of permeation. And other tastes than the salt, need about ten days to permeate the boiled egg with the eggshell. Also, "konnyaku" and bean curd are typical food which are poor in tastes permeation into them. Particularly, it takes several days to several dozens of days for a light good flavor and taste to permeate konnyaku and bean curd.

### Field of the Invention

The present invention relates to a liquid seasoning for food and a method of seasoning food, and further to a method that tastes and flavors are surely added to food in a short time by generating in a liquid seasoning minute air bubbles in the micro or nano order, further to a liquid seasoning and a liquid beverage to be used for the method, and food added with tastes and flavors, and also to a micro bubbles generating apparatus or device.

### Prior Art

Conventionally, such methods have been proposed: that ultrasonic wave is applied to food (which has been soaked with a liquid seasoning or to which a liquid seasoning has been applied) to cause tastes to permeate the food (Japanese Unexamined patent application Nos. HEI08-252077, and HEI 05-103635 official gazettes); a method of soaking food with a liquid seasoning under lowered pressure (Japanese Unexamined patent application No. 2003-174850 official gazette); and a method of dehydrating water content of food and soaking the food with a liquid seasoning (Japanese Unexamined patent application No. 2002-354988 official gazette). Also have been proposed are a method of pressurizing a boiled egg with the eggshell to provide a salty taste (Japanese Patent No. 2851997 official gazette) and a method of providing a salty taste to a boiled egg with the eggshell in a vacuum (Japanese Unexamined patent application No. HEI 10-136943 official gazette).

However, those methods of providing food with tastes involve a large-size of apparatuses and facilities for processing food, thereby taking cost and being not suitable for mass production. Besides, it cannot be said that even permeation of the liquid seasoning in a short time is accomplished, whereby the outstanding problem still remains. For konnyaku, tastes giving is performed by such methods as providing minute apertures (Japanese Unexamined patent application No. HEI 05-0316966 official gazette); dehydrating water content before soaking with a liquid seasoning (Japanese Unexamined patent application No. HEI 11-008952 official gazette); and first adding a seasoning powder to a konnyaku powder and mixing with a liquid alkali followed by shaping (Japanese Unexamined patent application No. 2003- 079328 official gazette). These methods are attempted from the fact that konnyaku is quite hard to be given tastes. However, the methods have such problems as needing to take trouble (Japanese Unexamined patent application Nos. HEI 05-0316966, and 11-008952 official gazettes) and also as being not suitable for a small quantity production. Particularly, the product provided by first adding a seasoning powder to a konnyaku powder and mixing it with a liquid alkali, followed by shaping has a defect of being poor in taste.

### SUMMARY OF THE INVENTION

The present invention provides that a liquid seasoning is subjected to a micro-nano bubble process (called hereunder "the nano processing"), thereby enabling higher permeation to various food, so that there are enabled "seasoning before cooking" for various food, permeation of tastes into konnyaku which called hard hitherto, and quick and sure permeation of "compositions presenting tastes" and "good flavor and taste" or deliciousness other than salty taste into boiled eggs with the eggshells, resulting in showing a large influence on the food industries.

### BRIEF DESCRIPTION OF THE DRAWINGS

Fig. 1 is an explanatory view of the ultra-high speed rotation system.
Fig. 2 is a front view of a micro-nano bubble processing device (nano-processing device, test machine).
Fig. 3 is an explanatory view of the pressurizing and depressurizing manners system.
Fig. 4 (a) is a front view showing a state an egg and the liquid seasoning are placed in a bag, and Fig. 4(b) a state the bag is exhausted of air. (Example 2)
Fig. 5(a) is a longitudinal sectional view showing states of the egg one day passed, Fig. 5(b) that two days passed, and Fig. 5(c) that three days passed. (Example 2)
Fig. 6(a) is a front view showing a state that a plate-shaped "konnyaku" (so-called devil's tongue jelly) and liquid seasoning are placed in a bag 12 which then tightly sealed, Fig. 6(b) that in one hour, and Fig. 6(c) that in five hours. (Example 5)
Fig. 7 (a) is a front view showing a state that a dumpling-like "konnyaku" white ball and strawberry syrup are placed in a bag 12 which then tightly sealed, Fig. 7(b) a state of the dumpling konnyaku white ball in two hours, and Fig. 7(c) that in six hours.
   (Example 6)
Fig. 8 is a perspective view showing the plate-shaped konnyaku being sliced. (Example 7)
Fig. 9 is a perspective view showing a "konnyaku" steak.
Fig. 10(a) is a perspective view of a "konnyaku" jerky and Fig. 10(b) that of a "konnyaku" gummi. (Example 8)
Fig. 11(a) is a front view showing a state that boiled and non-peeled potato is placed, with liquid seasoning, in a vinyl bag, and Fig. 11(b) that the seasoned potato is, together with salted butter, placed in a vinyl bag. (Example 9)
Fig. 12 is a front view showing a state that a raw squid and liquid seasoning are placed in a plastic container. (Example 10)
Fig. 13 is a front view showing an example of the micro-nano bubble processing device (a test plant). (Example 13)

### DETAILED DESCRIPTION OF THE INVENTION

The present invention has been designed to overcome the foregoing problems. An object of the present invention is to provide such a method of seasoning food that it takes a shorter time for seasoning and flavoring in comparison with the conventional art, the cost to season is notably reduced, and energy saving is largely facilitated, and food is given tastes lightly with the food's own taste being made use of; a liquid seasoning to be used for the seasoning method; a seasoned food; and a micro-nano bubble processing apparatus.

As a measure for achieving the above-said objects, the present invention employs the features that minute air bubbles in the order of micro through nano sizes are generated in the liquid seasoning used for seasoning food, or that water having minute air bubbles in the order of micro through nano sizes is mixed in a liquid seasoning. It is so concluded that generating the minute air bubbles makes smaller clusters or molecules of water or seasoning compositions in the liquid seasoning, whereby improving permeation of tastes into food.

The "micro-nano bubbles" denote minute air bubbles. Particularly, according to the sizes of diameter, the air bubbles are classified into those of up to several hundred nm in diameter called nano bubbles, those of from several hundred nm through several dozens µm called micro-nano bubbles, and those of several dozens µm through several hundreds µm called micro bubbles. In the present invention, the micro-nano bubbles include all of the "nano bubbles, micro-nano bubbles, and micro bubbles", and also include states in which the nano bubbles, micro-nano bubbles, and micro bubbles do each solely exist and those in which they exist as being mixed.

There are known at present two types of the apparatus for generating the micro-nano bubbles. One of them is a ultra-high speed rotation system developed by Mr. Hirofumi Ohnari, Professor of Tokuyama college of technology who discovered the micro-nano bubbles phenomenon ("models M2-LM/SUS etc. of Nano planet laboratory Co. Ltd."), and the other is a pressurizing and depressurizing system (models of SMX115 or AS-K3 of ASUPU Co. Ltd., and those of D-1, D-2, or D-3 types of DAINICHI Industry Co. Ltd.).

The former does so operate that a pressurized liquid is fed with a pump into the apparatus to make rotation there. The liquid deflects outwardly in the apparatus due to a centrifugal force, so that the liquid has a lowered pressure at the axial part to adsorb a gas through a suction port. The liquid rotates at high speed (400 to 600 revolutions/sec) along the outer periphery of the apparatus and the gas also does so rotate along the axial part. The cavity of the gas rotating at high speed causes difference of the speed between before and near the outlet for jetting bubbles, resulting in that the air in rotating is cut to be shaped in a flat belt-like form and twisted and torn, being made into the micro bubbles (minute bubbles of 10µm to several hundredµm or less in diameter) which bubbles jet accordingly. (see Japanese Patent Nos. 3397154; 4420161; 4525890)

It is so perceived that since the pressure at the peripheral part of the apparatus is higher than that of the inward part, the micro bubbles gradually shrink to be the maicro-nano bubbles (several hundred to 10µm or less in diameter) and further the nano bubbles (several hundred nm or less). The nano bubbles have not been clearly observed.

Another system is so carried out that a liquid is pressurized by a pump or the like and to which pressurized liquid air is added to be forcibly dissolved into the pressurized liquid while being pressurized. The liquid is transferred to a pressure releasing device to generate bubbles. Small bubble cores grow to be bubbles which look white. The bubbles are larger in size than those generated in the former system. Any other apparatuses according to any other systems will do provided that they are capable of being generating the micro-nano bubbles. To be noted is that the bubbles generated with the above-said systems are charged negatively at their peripheries, so that they do not get together to make larger bubbles.

The present invention is able to make use of either of the foregoing two systems although most of the examples described hereunder adopted the former apparatus since the apparatus and the operation are simple and show a large effect. Particularly, it is said that water subjected to processing with the former apparatus is excellent in physiological activity. And the water becomes weak alkaline. Moreover, it is said that both the former and the latter systems increase dissolved oxygen in the water, prevent lack of oxygen, and make active the behavior of microorganisms. Besides, the former apparatus when repeatedly performs proceassing the liquid seasoning shows a facilitated better permeation efficiency at each occasion of the processing while the latter apparatus seems having no change in the effect irrespective of the number of times of the processing after the processing is once carried out.

Meanwhile, water does not exist in the form of a single molecule and forms a cluster (a molecule group) consisting of many molecules with hydrogen connection. The cluster of water has different volumes according to various conditions of places the clusters of water exist. Water having a small cluster (called occasionally hereunder "small cluster water") is said to be useful for human being physiologically and medically. In addition, it is said that since the small cluster water does not contain excessive oxygen, it does, in the nature, restrain multiplication of microorganisms and keep a favorable environment. The useful "small cluster water" is produced by applying ultrasonic waves, far infrared rays, or electric field and magnetic field. (see Japanese Unexamined patent application 2009-125067.)

Measuring the sizes of the cluster is however said to be not probable at present. In the present invention, it is not clarified that whether the cluster in water in the liquid seasoning is or is not made smaller with the feature that the micro-nano bubbles are generated in the liquid seasoning. But, in view of the fact that the property of permeation of tastes is improved, it is so deduced that water and seasoning composition molecules (a lump) are made smaller in size. In the present invention, the reason that the property of permeation of the seasoning compositions is improved is however not clarified in fact.

There has no changes in the extent of permeation of tastes in the experiments carried out by the inventors in which experiment the processing with ultrasonic waves, magnets and so on (which process is said to be able to make smaller the cluster in water) was performed. From this, it is so deduced that the cluster in water does not correlate to the property of permeation of tastes. As a result, it is not clarified now what the micro-nano bubble process (the nano processing) has changed.

Conventionally, the technology that the liquid seasoning is subjected to the processing with the micro-nano bubbles to then be used for giving tastes to food is not known to public to the best of the inventors' knowledge.

The micro-nano bubbles are so generated that a liquid is taken into an apparatus for generating the micro-nano bubbles, air absorbed from the outside of the apparatus is mixed with the liquid to produce minute bubbles which are then jetted out of the apparatus to make the micro-nano bubbles. Therefore, such processes are fulfilled that the liquid seasoning is taken into a micro-nano bubble generating device to be mixed with air to generate minute bubbles which are jetted out of the device (ultra high speed rotation system, Ohnari system), or, that water is taken into a micro-nano bubble generating device to be mixed with air to generate minute bubbles which are jetted out of the device (pressurizing and depressurizing system).

In the system wherein water is subjected to processing with the micro-nano bubble generating device, the processed water is added to a liquid seasoning or mixed with a seasoning composition or ingredient (for example, a curry powder, etc.) to be used for seasoning. The ratio of the liquid seasoning and the processed water in this case is preferably generally 1:1 although it varies depending upon the sorts of the liquid seasoning. To be noted is that in the case that the liquid seasoning is added to the processed water, the property of permeation is poor in comparison with the feature of the liquid seasoning itself being subjected to the "nano processing". The liquid seasoning subjected to the foregoing process or that mixed with the processed water may be used to soak food with the liquid seasoning, thereby enabling a process of impregnation of the liquid seasoning to food in a short time.

In the present invention, minute bubbles are generated in the liquid seasoning. Thus, airborne microbial (aerobe) multiplies in the liquid seasoning, so that when the liquid seasoning so processed for provision of minute bubbles is used for seasoning, food is likely to rot. Thus, a filter for sterilization is to be provided in case of introducing air. There is also a method performed by blowing up a nitrogen gas instead of air into the liquid seasoning for the purpose of not increasing oxygen. Moreover, the liquid seasoning processed by the micro bubble generating device (called hereunder "nano processed liquid seasoning") is preferably subjected to methods such as heating, pressurizing, application of ultra-violet, or the like. Temperatures and time of heating for sterilizing microbial and germs are from 75 through 130°C for from 1 through 60 minutes and pressure to be applied is about 1 through 10 atm.

The present invention provides a process of impregnation to various food not limited to any particular ones. Food usable in the present invention may be, for example, vegetables such as green vegetables, root vegetable, mushrooms, etc., fruits, grain, cereal, beans, meat, fish and shellfish, raw eggs, boiled eggs, food made of boiled fish paste, and processed food of these food. Vegetables and grain are to be heated preliminarily. The impregnation process is carried out usually in such manner that the food and a liquid seasoning subjected to the nano processing are placed in a plastic bag or container and left intact. The present invention is particularly suitable for boiled eggs with eggshells, konnyaku (the devil's tongue jerry; or firm vegetable gelatin), bean curd, boiled white potatoes, or the like, into which the tastes not readily permeate.

Raw eggs with eggshells, konnyaku, and raw vegetables such as white potatoes, bamboo shoots, long white radish, taros, onions, lotus root, and Japanese butterbur are placed together with a nano processed liquid seasoning in a bag and heated for several minutes through several hours, and then left intact for several dozens of minutes through several days, whereby enabling tastes to permeate into food.

Those usable as composite constituents for the liquid seasoning which properly chosen for use according to objects and favorite may be tastes presenting components such as tastes of salt, soy sauce, miso, curry, garlic, ginger, Japanese soup stock, dried bonito shavings flavor, Japanese "Oden" dish, Japanese horseradish, red pepper, Korean kimchi, butter, cheese, chicken, beef, roast, shrimp, lobster, crab, scallop, chili added flavor, for example, ethnic dish flavor, china dish flavor, etc.,; compositions for preference, such as flavor tastes (flavors), for example, tastes of green tea, coffee, kobucha (a hot drink made with shredded or powdered kelp), vanilla, strawberry, orange, lemon, grape, perilla (beefsteak leaf), mango, watermelon, mint, chocolate, melon, or butter; nutritious compositions, such as DHA, EPA, minerals such as calcium or iodine, various vitamins, amino acids, or, collagen; alcohol such as brandy, wine, Japanese sake; and coloring matters; and those and any others will do or be usable provided that they are dissolved in water. The existing Ohnari type of the micro bubble generating device is not able to deal with liquid butter, and mayonnaise of high viscosity, but, oil content when it is emulsified or of small amount is able to be processed with the device. A small amount of oils and fats can be processed with the device in case that the oils and fats are dissolved with the liquid's temperature is made higher. Liquid beverages such as milk, soybean milk, or juices when subjected to the nano processing are usable as a liquid seasoning or solely or by itself.

Among these, tastes, for example, of soy sauce and soup stock are used by themselves. Flavor components such as vanilla or strawberry are used by adding them to alcohol, sugar, a vegetable-based sweetener such as stevia, or salt. Also, kobucha tea (made with shredded or powdered kelp) is based on a salty taste and is used, with sugar added, to coffee, chocolate, or black tea. However, materials containing solid components such as curry powder for providing curry taste or grinded garlic for garlic taste are now hard to be processed by the ultra-high speed rotation system. Hence, for the curry taste and garlic taste, essence of curry or of garlic are dissolved in water and used. Otherwise, the curry powder and grinded garlic are dissolved in water (subjected to the nano processing) and used. Furthermore otherwise, the curry powder or the grinded garlic is processed by use of the device according to the pressurizing and depressurizing system. Moreover, mayonnaise and butter having high viscosity are not able to be processed by the ultra-high rotation system at present. For these materials, essences of any others when each provide the same taste as of mayonnaise or butter, respectively, may be usable. Meanwhile, coloring matters may be usable also for making fine colors of materials such as the color of Japanese butterbur. The coloring matter may be usable for applying various colors to white materials such as peeled boiled eggs, white konnyaku, or bean curd.

The present invention as explained above provides the method of processing, with the micro-nano bubbles, the liquid seasoning or water used for the liquid seasoning; the processed liquid seasoning, and food seasoned by use of the processed liquid seasoning. Accordingly, the following effects can be obtained.
(1) A liquid seasoning which is superior in permeation into food is produced with a simple operation. The effect of the liquid seasoning's permeating food is kept from half of to one month or more.
(2) The rate of providing food with tastes or seasoning food is able to be made higher, so that the cost to provide food with tastes and the energy required for this purpose are able to be largely reduced.
(3) Not only salty taste but also compositions of good flavor or taste are able to be fully permeated. Also, a liquid seasoning of a thin taste is able to be fully permeated.
(4) Tastes and colors can be provided to food with low bias or unevenness.
(5) Even in case that the processed liquid seasoning is sterilized by heating, the effect of the liquid seasoning's permeation property does not change.
(6) The processed liquid seasoning when sterilized is able to be preserved in a refrigerator for a long term (more than one month).
(7) With respect to food, such as boiled eggs with eggshells, konnyaku, etc., into which the liquid seasoning is hard to permeate, permeation of the liquid seasoning is able to be fast and surely carried out.
(8) Food which the liquid seasoning has permeated is in such state that compositions of good flavor or taste and salty content permeate the food in a natural state without heating, so that tastes and flavors originally held in the food are kept.
(9) Regarding dried fish, mentaiko (cod roe preserved in salt and red pepper), konnyaku, and white potatoes, or the like, their particular smells or odors are taken.
(10) Konnyaku is said that it cannot be given browning. But, konnyaku which seasoned with the method of the present invention is able to be browned, when griddled, to look like a beefsteak.
(11) Vegetables (which added with the liquid seasoning but not boiled) can be kept in their original shapes. Long white radish is kept in its condition of inherent taste.
(12) A small amount of fats is emulsified or into a form to be readily soluble in water.
(13) The process according to the present invention is capable of being carried out in a short time and does not need heating for seasoning, whereby showing a large effect of energy saving.

### PREFERRED EMBODIMENTS OF THE INVENTION

Seasoning boiled eggs having eggshells is performed by use of a liquid seasoning which subjected to the process carried out with the micro-nano bubble generating device. The methods for seasoning are to apply the liquid seasoning to food or to soak food in the liquid seasoning. Hereunder, the present invention will be detailed with referring to Examples and Comparative examples. The present invention should not be limited to such examples.

### EXAMPLE 1

### Micro-nano bubble process for liquid seasoning

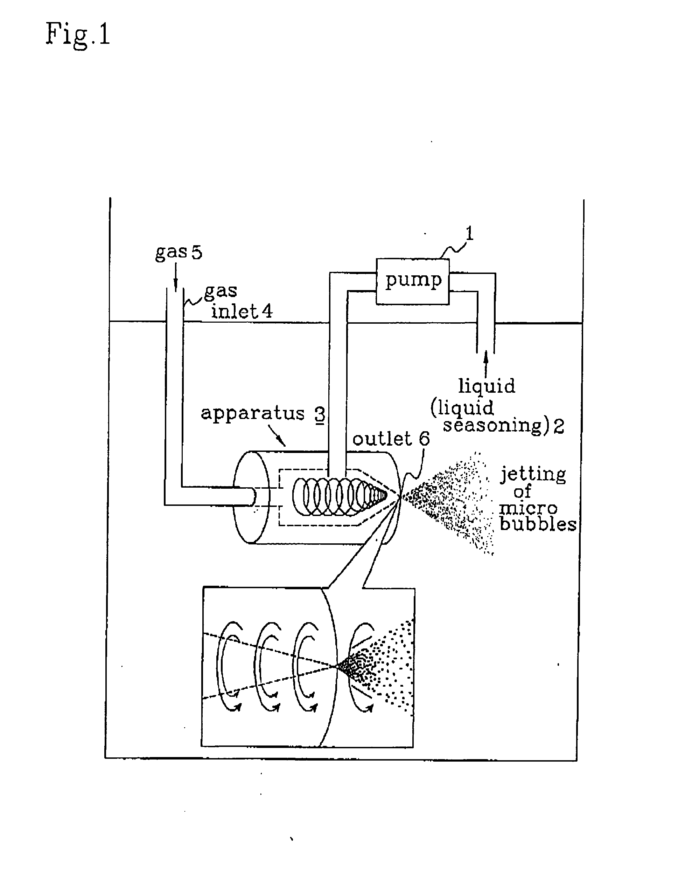

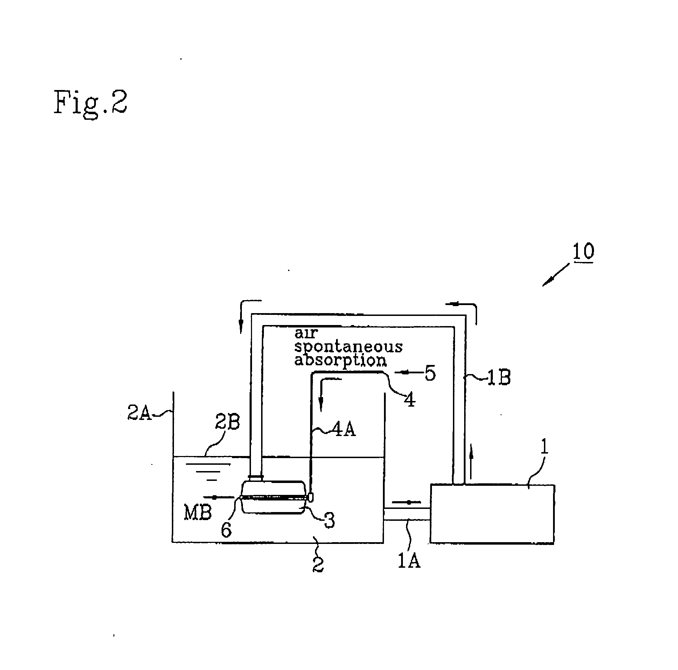

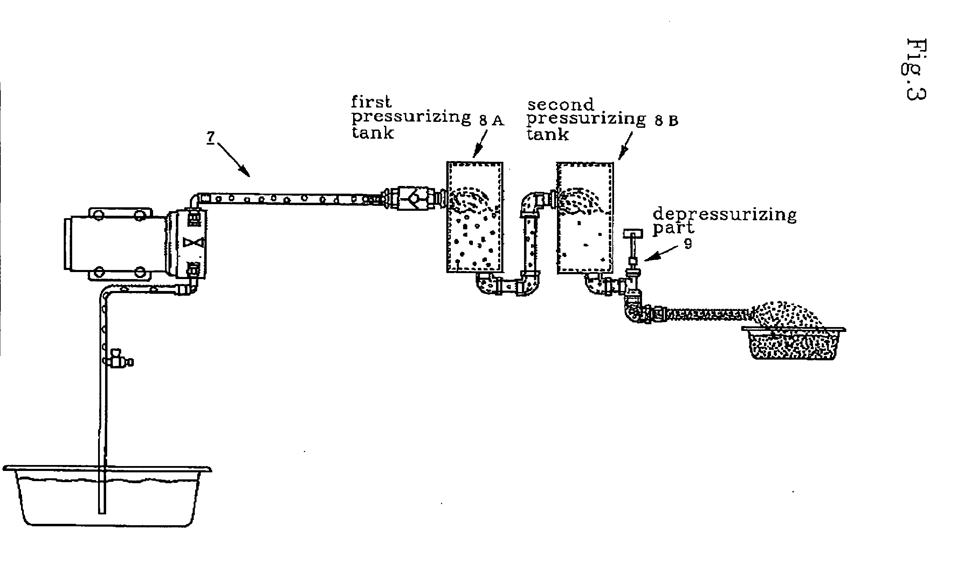

Fig. 1 is an explanatory view showing a ultra-high speed rotation system (Ohnari system) device, Fig. 2 an example of a micro-nano bubble processing device (a test machine) using the micro bubble generating device shown in Fig. 1, and Fig. 3 a pressurizing and depressurizing device (DAINICHI Industry Co., Ltd.). These devices perform the micro-nano bubble processing (called hereunder the "nano" processing) to a liquid seasoning. For the present invention, the device shown in Fig. 2 was mainly used for experiment.
Fig. 1 illustrates a principle for generating micro bubbles. First, a Liquid 2 (water or a liquid seasoning) subjected to pressure by a pump 1 is fed into a micro bubble generating device 3. The liquid 2 rotates in the device 3. Inside the device 3, the liquid 2 deflects outwardly with a centrifugal force and the part around and near the axis has a lower pressure, so that a gas 5 is taken into through a suction port 4 (spontaneous adsorption). Inside the device 3, the liquid and the gas each rotates. The number of revolution is from 400 through 600rps. The liquid 2 rotates at ultra-high speed at the outer periphery of the device, and the gas 5 does so at the part around and near the axis. The cavity of the gas rotating at ultra-high speed has a difference of rotation speed between before and near the gas's jetting through the outlet, resulting in that the gas being rotating is cut to become micro bubbles which jetted through the outlet 6 of the device 3. And, micro bubbles are inferred to be pressed with circumferential pressure and made smaller into the form of the nano bubbles.
Fig. 2 shows a small sized micro-nano bubble processing device 10 (called hereunder "nano processing device", "test machine") using the micro bubble generating device 3 shown in Fig. 1 and being capable of processing the liquid seasoning of about 5L. The processing device 10 comprises a tank 2A and a pump 1 connecting therewith through a water absorbing pipe 1A and a water feeding pipe 1B, the water feeding pipe 1B connecting at its utmost end with a part of a micro bubble generating device 3 near its utmost end, and an air feeding pipe 4A connecting to the root part of the micro bubble generating device 3. A liquid (a liquid seasoning) is fed, with a pump 1, into the micro bubble generating device 3, so that air 5 is taken into through a suction port (gas inlet)4 4 and agitated together with the liquid seasoning 2, resulting in that micro bubbles MB are jetted from the outlet 6. In the drawing, 2B is a liquid surface which swells with bubbles according to specific kinds of liquid seasonings. In the Example described hereunder (the rotation system type), the device 10 shown in Fig. 2 is employed for performing the nano processing for the liquid seasoning.
   The micro bubble generating device 3 used in the experiment is 50mm in diameter and about 100mm in length and is capable of processing the liquid of about from 1 through 10L. In case that the liquid to be processed is in volume of from 100 through 500L, a plurality (about 4 through 6) of the devices of the above-said level are needed.
Fig. 3 shows an example of the pressurizing and depressurizing type device. The model is shown in Fig. 1 in Japanese Unexamined patent application 2010-22955 (DAINICHI Industry Co., Ltd.). The apparatus 7 is so operated that the first pressurizing tank 8A and second pressurizing tank 8B pressurize a gas (air) to cause the gas to dissolve in a liquid and the depressurizing part 9 changes the pressure back to the regular pressure, thereby generating micro bubbles. This kind of apparatuses have been proposed in various styles. That shown in Fig. 3 is an example among them.

The apparatus shown in Fig. 2 is used to perform the nano processing for liquid seasonings. The apparatus is the test machine having a tank capacity of about 8L which is able to process a liquid seasoning of about 5L at a time. And the foregoing micro bubble generating device 3 is capable of processing a liquid seasoning of about 5L per one minute (a liquid seasoning of 5L may be processed in an extent of one cycle per one minute). When the liquid seasoning of 5L is processed for from 20 through 30min, processing of about from 20 through 30 cycles will be performed. By this, the liquid seasoning will be given full generation of micro bubbles and nano bubbles. Even when the processing is carried out for two hours under the same condition, there is not seen a conspicuous change in the effect.

Composition components for the liquid seasoning may be, as foregoing, salty taste, good flavor/taste components such as soy sauce or the like, coloring matter, alcohol, etc. According to the processing of the present invention, the property of permeation of these compositions to food is very much facilitated. Next, an example of the liquid seasonings employed in the present invention will be detailed.

### (Liquid seasoning A)

Japanese style soup stock (to be diluted for use): This is a product made by somi shokuhin Co., Ltd., and comprising soy sauce (authentically made by fermentation), flavor material (dried bonito shavings), sugar, salt, a fermented seasoning liquid, a seasoning material (amino acid, etc.,)(ratio of the ingredients not identified). To the soup stock, a small amount of sugar, mirin (sweet cooking sake), and/or, a liquid seasoning, is added when required. This stock liquid as it is or diluted from 3 through 10 times is used as the liquid to be processed. The liquid to be processed of 4 through 5L was subjected to the nano process (the nano processing with the apparatus shown in Fig. 2) for 20 through 30minutes.

### (Liquid Seasoning B)

Liquid seasoning for preparing flavor and taste of "Oden dish" (The maker not identified): This raw material comprises sugar, soy sauce, "special blend soy sauce", an amino acid liquid, beef bouillon, dried bonito shavings essence, protein hydrolyzed, dried bonito shavings soup stock, pork essence, kelp essence, a seasoning (amino acid, etc.,), alcohol, acidity or sourness, and mannitol (ratio of the ingredients not identified). The raw material is used as it is or diluted from 4 through 5 times or about from 10 through 15 times. This liquid to be processed of from 4 through 5L was subjected to processing for from 20 through 30 minutes with the apparatus shown in Fig. 2.

### (Liquid Seasoning C)

Soy sauce (made by YAMAKI Co., Ltd.) mixed with Japanese style soup stock explained in the foregoing liquid seasoning A in a ratio of 1 to 1 (a starting liquid) was subjected to the nano processing for from 20 through 30 minutes by use of the apparatus shown in Fig. 2.

### (Liquid Seasoning D)

Grape juice of 750CC and red wine of 300cc (made by Shimane Winery) are mixed and subjected to the nano processing by use of the Fig. 2 apparatus in the same manner.

### (Liquid Seasoning E)

A commercially available SHIRODASHI("White" soup stock) of 1L subjected to the nano processing for from 20 through 30 minutes by use of the Fig. 2 apparatus (heating made for 2 minutes).

### (Liquid Seasoning F)

Vanilla flavor. 100cc of nano-processed water (provided by that water of 1L was subjected to the nano processing for 5 minutes by use of the apparatus shown in Fig. 2),(heating made for 3 minutes) to which sugar 8g and vanilla essence 7 drops were added.

### (Liquid Seasoning G)

Curry taste. 100cc of nano-processed water provided from water of 1L subjected to the nano-processing for 5 minutes, alcohol of two teaspoons, curry powder of three teaspoons, and one piece of bouillon are fully agitated and boiled for 2 min until seething. Also tried was garlic taste using three teaspoons of grated garlic in place of curry powder. To be noted is that water used for the liquid seasoning G was subjected to processing by use of SMX115 type apparatus (DAINICHI Industry Co., Ltd.). This apparatus is capable of performing the nano-processing for the liquid seasoning G' in which curry powder or grated garlic is dissolved.

### (Liquid Seasoning H)

It was made by that an original liquid of strawberry syrup or orange syrup as it is was subjected to the nano-processing for 15 minutes with the apparatus shown in Fig. 2 (without heating).

Most of the foregoing liquid seasonings were subjected to heating process after the nano-processing. The heating process was that heating was continued for from 2 through 3 minutes after seethe according to quantities of the liquid seasonings. Though heating was carried out, the effect of the nano-processing was kept for more than one month. It will be appreciated that sterilization by pressurizing and heating, and by use of ultraviolet are usable, and also that nitrogen gas may be employed instead of air.

### EXAMPLE 2

### Permeation of liquid seasoning into boiled eggs [1]

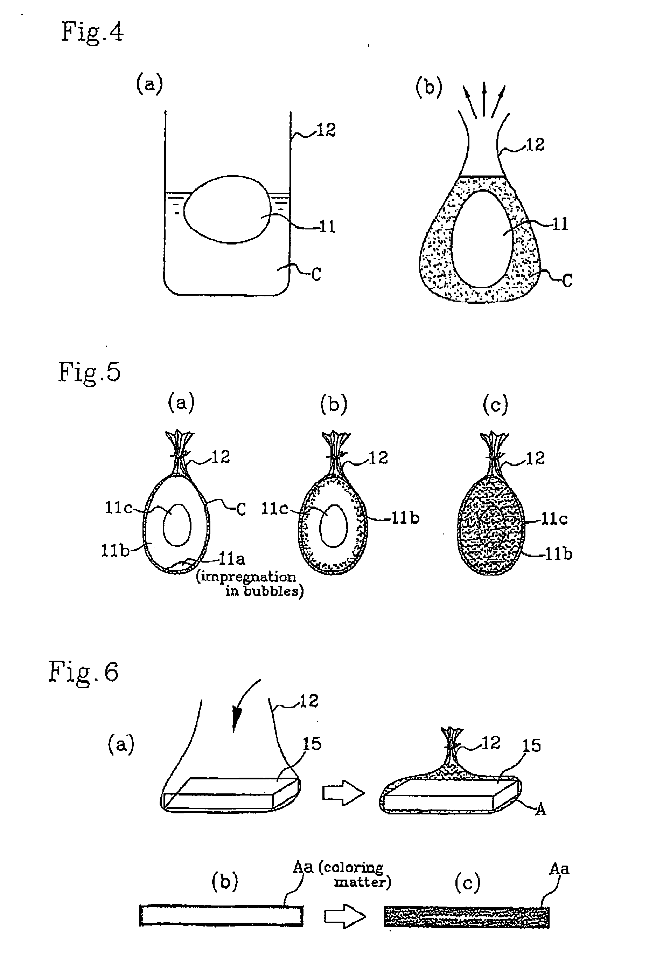

As shown in Fig. 4 (a), a boiled egg 11 having an eggshell and 70% boiled, together with 5 - 10cc of the liquid seasoning C (subjected to the nano-processing for 30 minutes, sterilization by heating (75 - 100°C, 2 - 3min) ) were placed in a plastic bag 12, and the bag was exhausted of air as shown in Fig. 4(b) and preserved in a refrigerator.

As a result, as shown in Fig. 5 (a), in one day (in 24 hours after the start of process), it was found that the liquid seasoning C had impregnation into the bubble 11a. In two days (in 48 hours), as shown in Fig. 5(b), it was found the liquid seasoning C had impregnation in a color of light brown into the part of egg's white 11b. In three days (72 hours after the start of process), as shown in Fig. 5(c), it was found the liquid seasoning C had impregnation into the whole of the egg including the egg's yolk 11c. In four days, the tastes completely permeated the egg. The seasoned egg was delicious very much.

The boiled eggs are prepared by heating raw eggs to make hard-boiled eggs, 70%-boiled eggs, soft-boiled eggs, or, a kind of boiled egg made sometimes in the water of a hot spring (so that the yolk is partly solid and the white portion is runny). These can be made freely by adjusting temperatures and time. Also,,
when manufacturing a large quantity of those, as a conventional manner, raw eggs placed in a container at a unit of several hundred of raw eggs are blanched in an iron pot device. Hard-boiled eggs are obtained by blanching for 6 minutes at 92±2°C, 70%-boiled eggs for 4-5 minutes at 92±2°C, soft-boiled eggs for 3 minutes at 92±2°C, and the "hot spring" boiled egg for 20 minutes at 65 - 68°C. The 70%-broiled eggs referred to above have their yolks being thick. Further, blanching in the present invention may employ heating with steam or other heating measures. The boiled eggs with eggshells provided accordingly were used as specimens. It is preferable to use 70%-boiled eggs which may be a middle level between the hard-boiled eggs and the soft-boiled eggs since tastes are hard to permeate hard-boiled eggs. Moreover, the cases for processing soy sauce taste or curry taste have such possibility that the eggshells of the boiled eggs are colored in an unwelcome color. It is preferable to use reddish eggs in the processing. And, eggs from 3 through 5 days after laid have a tendency that after blanching, the eggshells are readily peeled off.

Furthermore, a commercially available white soup stock's original liquid subjected to the nano-processing in the similar manner (the liquid seasoning E, heating process provided) completely permeated the eggs within 3 - 4 days. Also, 3.5cc of the liquid seasoning F was used to obtain seasoned boiled eggs with eggshells, similarly to Example 2. The obtained eggs were given a light vanilla flavor within about three days.

### EXAMPLE 3

### Permeation of liquid seasonings into boiled eggs [2]

Boiled eggs used in Example 2 together with liquid seasonings of curry taste and garlic taste of Liquid seasonings G and G' were used to be subjected to the processing similarly in Example 2. Obtained within 4 - 5 days were boiled eggs into which curry taste and garlic taste permeated inwardly sufficiently, The liquid seasoning G' was subjected to heating process for 2 - 3min after the nano-processing.

### Comparative Example 1

In the Example 2, the liquid seasoning C without having the nano-processing was employed to similarly process 70%-boiled eggs. Even after seven days, only salty taste was felt high but compositions of good flavor and taste such as soy sauce and amino acid were not much felt.

### EXAMPLE 4

### Permeation of liquid seasonings into boiled eggs [3]

Next, seasoning boiled eggs having not eggshells will be detailed. Hard-boiled and 70%-boiled eggs with eggshells removed are placed in a plastic bag in a similar manner to that in Fig. 4. And similarly, the original liquid of soup of the liquid seasoning C was subjected to the nano-processing and then to heating process. Also, about 5cc of this processed liquid was placed in a plastic bag and preserved in a refrigerator. In one hour, the liquid seasoning had impregnation about 2mm in depth from the surface, and it was found that the white of eggs were colored slightly. Taste of the white was that of the liquid seasoning. The taste permeated almost completely in one day, and in 2 to 3 days, the liquid seasoning had impregnation into the white and yolk wholly and sufficiently, and taste was quite delicious. In other words, flavor and taste are mild, and tastes of materials act directly.

Characteristics of this seasoned eggs with eggshells removed are soft as a finish; the texture as it is keeping flavor particular to eggs, as different from a customarily seen boiled eggs, while enabling sure seasoning to the central part of the yolk, resulting in that there is provided food expressing good flavor and taste of the liquid seasoning absolutely differing from eggs with eggshells removed. Meanwhile, a liquid seasoning having a color and a taste of mangoes was made and subjected to the nano-processing and heating process (2 - 3min), and placed together with eggshells-removed eggs (boiled eggs without eggshells) in a plastic bag. In about five hours, eggshells-removed eggs in a gold color and with mangoes taste permeated wholly were obtained.

### Comparative Example 2

Eggshells-xemoved eggs and the liquid seasoning C employed in Example 4 as it is without the nano-processing were placed in a plastic bag and preserved in a refrigerator. Even after three days, the taste of the liquid seasoning did not permeate inwardly of the eggs but did only the surface.

### EXAMPLE 5

### Permeation of liquid seasonings into Konnyaku [1]

As seen in Fig. 6(a), a usual plate (or block)-shaped konnyaku 15 (13 by 7 by 25 cm) was boiled for two minutes for sterilization and placed together with 30cc of an original liquid of Liquid seasoning A (subjected to the nano-processing for 20 minutes, and to heating process for 2 - 3min) into a plastic bag 12, which is then tightly sealed while being exhausted of air and preserved in a refrigerator. In one hour after soaking with the liquid seasoning, as seen in Fig. 6(b), coloring matter Aa of the liquid seasoning A permeates about 2mm in depth from the surface and taste of relevant level was given wholly. In five hours, as seen in Fig. 6(c), the coloring matter Aa permeates about 1cm in depth from the surface, thereby finishing a complete seasoned food. In addition, a feel of eating konnyaku texture is kept, deliciousness of the food being felt, and a smell inherent to konnyaku was eliminated. Although permeation for about initial one hour does not reach the central part of konnyaku which part is just in the same situation as of raw konnyaku, the impregnation progresses (until the period of five hours elapsed) so that the konnyaku in processing even when washed with water does not release the coloring matter and tastes. After soaking overnight, the tastes completely permeated the central part of konnyaku. In case of bean curd subjected to the same processing, the taste of the liquid seasoning permeated bean curd in an hour, providing high deliciousness.

### Comparative Example 3

Similarly, the original liquid of the liquid seasoning A as it is was employed to cause konnyaku to be subjected to the same processing. There was not found inwardly extending permeation although sticking of taste and coloring matter only to the surface was seen. The sticking of taste and coloring matter vanished after washing with water. In about two months, salty content among the tastes permeated inwardly, but, compositions for good flavor and taste do not permeate inwardly, and do not reach the core part in two weeks. The liquid seasoning A diluted about ten times was almost not seen to make permeation even in two months. Konnyaku in this case was just as that it is generally said to be not able or quite hard to be seasoned. Even in the present invention, thick taste permeates quickly while thin taste takes time for permeation. But, thin taste (dilution in ten times) makes permeation almost completely within 10 hours.

### EXAMPLE 6

### Permeation of liquid seasonings into Konnyaku [2]: Permeation of sweetness and coloring matter into konnyaku white ball

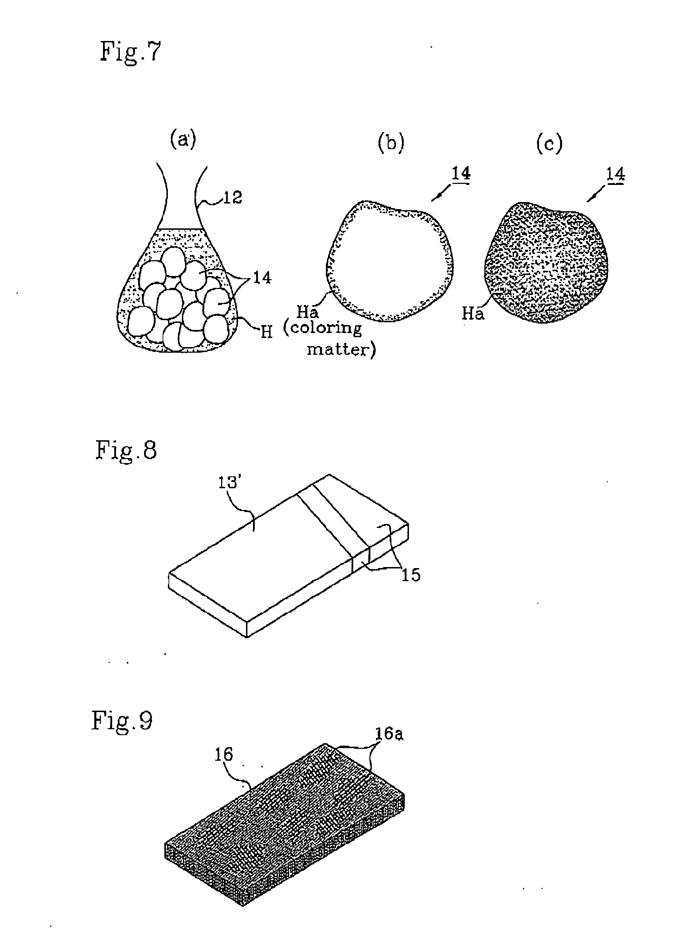

As shown in Fig. 7(a), fifteen balls of konnyaku white ball 14 (about 2 - 3cm in diameter, produced in Yamagata Prefecture) together with 20cc of strawberry syrup (sugar added, the liquid seasoning H subjected to the nano-processing for 15min, heating provided) were placed in a plastic bag 12 and preserved in a refrigerator. In two hours after placing the materials in the plastic bag, as shown in Fig. 7(b), the coloring matter Ha permeated about 3mm in depth from the outside. In six hours after placing the materials in the bag, as shown in Fig. 7(c), red color permeated 80% which was sweet and smelled strawberry flavor. With orange syrup, grape drink and powdered green tea syrup, and the liquid seasoning D (wine), the same result was obtained. Aloe and nata de coco when subjected to processing with the liquid seasoning H had impregnation of color and taste within about one hour. Such aloe or nata de coco is mixed in yogurt to provide that red and fine colored aloe and nata de coco particles look nice.

### Comparative Example 3

Konnyaku white balls were similarly soaked in the strawberry syrup not subjected to the nano-processing. In six hours, coloring appeared lightly only on the surface. By washing with water, the color vanished. The situation was the same in three days.

### EXAMPLE 7

### Permeation of liquid seasonings into Konnyaku [3]: Konnyakusteak

The plate-shaped konnyaku 13 in the Example 5 was boiled for sterilization for two minutes and then placed together with 30cc of liquid seasoning (provided by the liquid seasoning A not subjected to sterilization with heating, diluted four times with water and subjected to the nano-processing) into a plastic bag 12 which is tightly sealed while exhausted of air and preserved in a refrigerator. In five hours after soaked in the liquid seasoning, the seasoned konnyaku 13'was taken out of the bag 12 and sliced into thickness of 7mm. Five slices of konnyaku 15 (Fig. 8) were cooked in a frying pan for about 30 seconds to obtain the sliced konnyaku 16 which burnt in light brown as steak partially on the surface as seen in Fig. 9. The color of burning in light brown 16a is from burning of the liquid seasoning. The cooked slices of konnyaku 16 were sampled to feel a moderate salt, seasoning compositions and a food texture inherent to konnyaku, with deliciousness. The cooked sliced konnyaku 16 with mayonnaise is quite tasty.

### Comparative Example 4

Konnyaku sliced as in the Example 7 but not subjected to the particular processing was cooked in a frying pan. It was found that konnyaku lost water content but was not browned on the surface. Also, a steak konnyaku commercially available does not have any tastes particularly provided.

### EXAMPLE 8

### Permeation of liquid seasoning into Konnyaku [3]: konnyaku jerky, konnyaku "gummi"

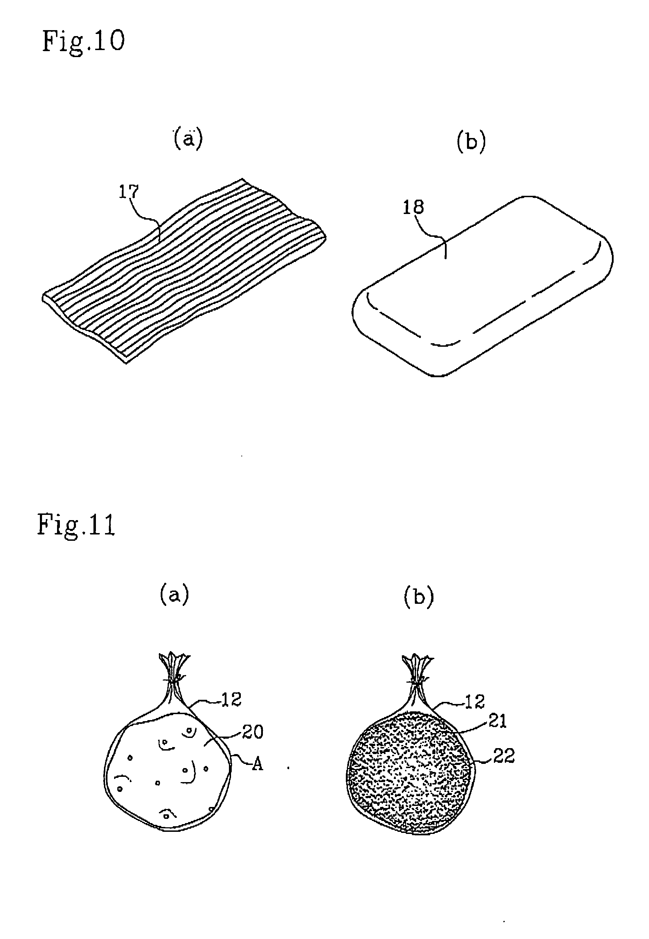

sliced konnyaku 15 (Fig. 8) provided in Example 7 were dried until water content is from 20 through 30% to obtain a konnyaku jerky 17 (Fig. 10(a)) which is tough as a jerky (dried meat). And by drying until water content from about 40 through 50%, konnyaku gummi 18 having a food texture as gummi (Fig. 10(b)).

### EXAMPLE 9

### Permeation of liquid seasoning into vegetables

### (1)Boiled bamboo shoots

Bamboo shoots 350g(boiled with water and divided in two) heated again for five minutes, and a liquid seasoning 30cc (not subjected to heating process) provided from a mixture of the liquid seasoning A 400cc, water 1600cc and sugar 50g subjected to the nano-processing are placed in a plastic bag and preserved in a refrigerator. In six hours after the preservation, light seasoning had impregnation into the bamboo shoots with light color and elegant taste. In 12 hours, the light seasoning wholly permeated, providing deliciousness.

### (2) Potatoes

Potatoes 20 with skin were boiled with a high pressure pot for ten minutes and cooled. Thereafter, as shown in Fig. 11, the potato 20 together with the liquid seasoning A 30cc in the same manner as the case of boiled bamboo shoots are placed in a plastic bag 12. In three hours, the liquid seasoning had impregnation to potato about 30%, and in 30 hours the taste permeated the central part of potato. The seasoned potato is superior in food texture, particularly, in feeling of going down the throat smoothly, thereby providing an excellent seasoned steamed potatoes differing from general ones. The seasoned potato 21 with skin was sealed together with 5cc of salt butter 22 in the bag 12 and heated with a microwave oven, so that a potato having flavor and taste quite different from those of the commercially available salt buttered potato was obtained. Usually, potatoes with skin as they are cannot be seasoned unless they are boiled well as oden dish's stuffs.

### (3) Lotus root

A commercially available boiled lotus root (4cm in diameter and 6cm in length) was boiled and cooled. The lotus root together with 20cc of the liquid seasoning used for the case of boiled bamboo shoots and subjected to the nano-processing are placed in a plastic bag and sealed and preserved in a refrigerator. In one hour, the liquid seasoning had impregnation a little onto the surface of lotus root, and in 6 hours impregnation wholly. Since the liquid seasoning and lotus root are similar in color to each other, the state of impregnation is not so easy to confirm although it is confirmed through flavor. Food texture of clearness was not Jost.

### (4) White radish

Peel of radish (5cm in diameter and 6cm in length) was peeled off. The radish was boiled for 7 minutes with a pressure pot and cooled. The radish together with 10cc of the liquid seasoning (provided by the liquid seasoning B diluted 17 times and subjected to the nano-processing for one minute with the apparatus shown in Fig. 2, and subjected to heating process for 2 minutes) were placed into a plastic bag 12 and preserved in a refrigerator. In two hours, the liquid seasoning had impregnation about 1mm in depth from the surface of radish, and in 5 hours impregnation 80%. Then, the radish was taken out of the bag while the impregnation progressed. The seasoned radish was very much delicious at the time five hours elapsed in processing and sweetness of radish was kept firmly. Difference from a commercially available radish in "Oden" dish (wherein various ingredients such as daikon (radish), konnyaku (firm vegetable gelatin), chikuwa (fish-paste roll) and eggs are cooked in soy sauce-seasoned broth.) is that it does not at all lose its shape though boiled and deliciousness of Japanese soup stock permeates the material radish. The radish may be shipped in a style of being packed in a bag and used as a material for the oden dish.

### (5) Cooked beans and seasoned pickled dried green plums

Cooked beans are usually made by soaking boiled soy beans in a liquid seasoning. Tastes do not readily permeate and it takes a long time (several days through a dozen or more days) to do permeation. By contrary, the present invention provides that boiled soy beans are soaked in the liquid seasoning subjected to the nano-processing to cause tastes to fully permeate soy beans in one to two days. Meanwhile, seasoned pickled dried green plums are provided by that first, salt is removed from pickled dried green plums, the green plums are soaked in the liquid seasonings replaced two to three times. It takes more than ten days for the process. But, the liquid seasoning subjected to the nano-processing according to the present invention enables the tastes to fully permeate the pickled green plums in one to two days. Conventionally, upon replacing the liquid seasonings, chopsticks are used for picking up the green plums to transfer them. The present invention does not need the replacing of the liquid, thereby having not a fear of damaging the pickled green plums.

### (6) Others

The liquid seasoning of the foregoing item (1) had completely impregnation into boiled taros and boiled onions in about six hours. Particularly, onions kept sweetness completely and had a quite good balance with the liquid seasoning. Onions when boiled emit broth. According to the present invention, broth is confined in onions. Boiled Japanese butterbur was completely permeated with the liquid seasoning in three hours. Even after processing, Butterbur was kept as it is (as its original configuration) in color, shape, flavor, and food texture. For blanched green soy beans, taste of the liquid seasoning fully permeated to beans inside the shell in about six hours. There is achieved deliciousness quite different from salty taste that green soy beans have usually. The product may be preserved in refrigeration after the process of seasoning.

### EXAMPLE 10

### Permeation of liquid seasoning to raw squid and cod roe preserved in salt and red pepper

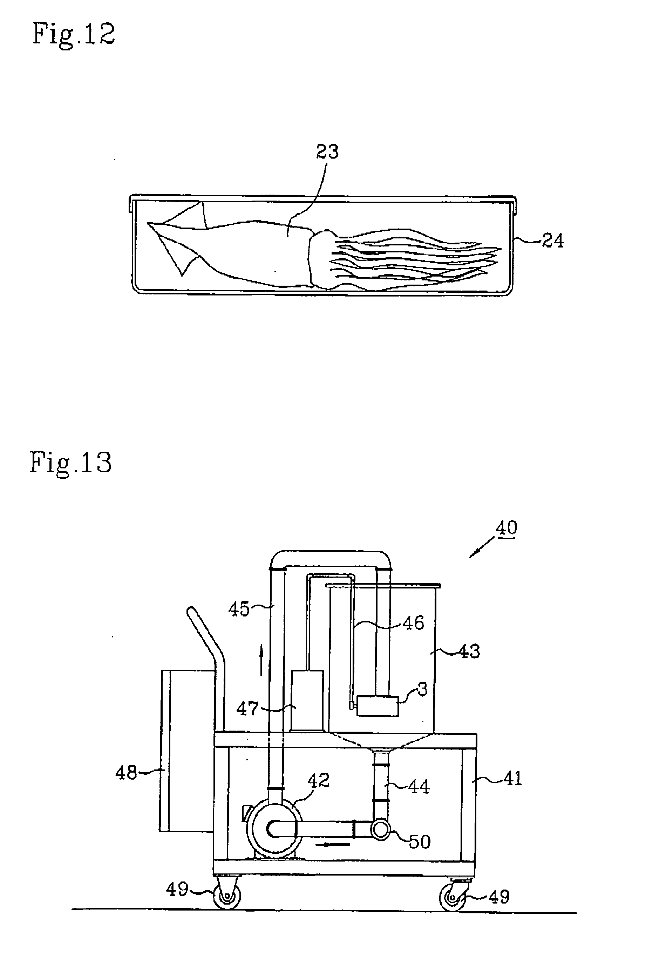

A fresh raw squid 23 ("Surumeika" squid for use in a dish of bite-sized fresh seafood) of a large size (20cm in longitudinal extent) was washed with water and internal organs were removed. The prepared squid together with 50cc of the liquid seasoning (which is the same as that used in the foregoing cases for vegetables) were wholly placed in a plastic container (Tupperware) 24 as seen in Fig. 12 and preserved in a refrigerator. In six hours, the liquid seasoning permeated to the whole of squid which smelled an excellent flavor. The squid is suitable for eating raw or for making cooked squid. The squid soaked in the liquid seasoning for 6 through 10 hours, dried overnight and packed in a vacuum can be transported a long way. Also, odor inherent to raw squid can be eliminated by soaking the squid in the liquid seasoning according to the present invention.

Cod roe preserved in salt and red pepper is provided conventionally by that soaking is performed with the liquid being replaced two or three times and the term for soaking being several days through more than a dozen days. But, the particular odor cannot be eliminated. Also, when replacing the liquid with a fresh liquid for soaking, the cod roe is likely to be damaged in shifting, resulting in a large quantity of defective products. The present invention performs soaking only once in a short term (1 - 3 days) to cause tastes to fully permeate the material. Only one time of soaking process will do, so that it does not take trouble and time and it is less likely to have defective products. Furthermore, the particular odor of cod roe can be completely eliminated.

### EXAMPLE 11

Sliced meat was soaked in the same liquid seasoning and the taste of the liquid seasoning permeated the meat in an hour. The meat is suitable for barbecue or the like. A process for "seasoning before cooking" for a processed product of meat and fish (ham, sausage, etc.,) conventionally needs a considerable time (several days through more than a dozen days). The present invention has an advantage that the above-said process can be dealt with in a short time of 30% or less of the conventional method. The liquid seasoning for meat usually contains powdery lard which often becomes hard. The processing provided by the present invention is performed to make lard dry (as dry powder). Seasoning, and seasoning before cooking for shellfish such as boiled ark shell need several days conventionally. The present invention carries out the seasoning before cooking for boiled ark shell only in one hour and thus has the property of quickness. Moreover, regarding dried fish, the seasoning process before cooking is performed before drying. The liquid seasoning according to the present invention may be usable to provide a sufficient "seasoning before cooking" with soaking in one through several dozens of minutes.

### EXAMPLE 12

Moreover, the special measures for lightly pickled vegetables when subjected to the nano-processing enable lightly pickled vegetables to be completed in several hours which usually takes about one day. And makers are enabled to perform seasoning for "boiled beans usually made with sugar and soy sauce" in one through two days. Time required for carrying out the processing can be largely shortened. Also, essential materials for oden dish, such as radish, konnyaku, boiled eggs may be preliminarily subjected to the processing with the liquid seasoning of the present invention, so that the oden dish materials as they are may be eaten as oden dish served cold. Accordingly, the present invention contributes to providing variety of culture of eating.

### EXAMPLE 13

5L of each of milk, soy bean milk, and juice was subjected to the nano-processing for 20 - 30minutes with the apparatus shown in Fig. 2, followed by heating process for three minutes. These liquid drinks or beverages were used as a liquid seasoning in which bean curd was soaked so that the taste permeated the bean curd in one day. Also, these drinks or beverages when drank were quickly absorbed by stomach.

### EXAMPLE 14

Fig. 13 shows a micro-nano bubble processing device 40(test plant) provided by that the micro-nano bubble processing device 10 shown in Fig. 2 is made movable. The processing device 40 comprises a carrier 41 having a pump 42 and a tank 43, the pump 42 and the tank 43 connecting through a water absorbing pipe 44 and a water discharging pipe 45. An utmost end of the water discharging pipe 45 is connected to a part of a micro bubble generating device 3 nearer the front side. An air hose 46 is connected to a root of the micro bubble generating device 3. A root of the air hose 46 is connected to an air filter 47. 48 is a control board, and 49 casters. 50 is a take-out port for taking out a liquid seasoning processed. The device 40 can make processing of about 20L of liquid seasoning. However, it takes one hour or one hour and half to fully process 20L of liquid seasoning. In such situation, the number of provision of the micro bubble generating device 3 may be increased 2 to 4, the time of processing can be shortened from one half to one fourth. In this case, the number of pumps is also to be increased. In the nano processing, a considerable quantity of heat generates. Thus, it is preferable, in consideration of keeping the quality of products, to provide the tank 43 with a dual structure in which a cooling water flows to prevent rise of temperatures of the liquid seasoning.

For the case industrially needing a large amount of liquid seasoning, a tank of capacity of several hundred liters or more may be usable. In this case, the numbers of the micro bubble generating devices 3 and the pumps are required to counterbalance the volume of the liquid seasoning to be processed, for example, the number of the micro bubble generating device 3 may be 10 to 20 or more.

The liquid seasoning subjected to the micro-nano bubble processing (the nano processing) has the properties of high permeation into various foods. Thus, the present invention realizes not only "seasoning before cooking" for various foods but also causing tastes to permeate konnyaku which is conventionally said to be hard; furthermore, enabling "taste presenting components" and compositions of good flavor and taste other than salty taste to quickly and surely have impregnation into boiled eggs with eggshells, whereby showing much influences on the food industries.

### Explanation of Reference Numerals

- 1: pump
- 1A: Water absorbing pipe
- 1B: Water feeding pipe
- 2: Liquid (Liquid seasoning)
- 2A: Tank
- 2B: Liquid surface
- 3: Micro bubble generating device (rotation system)
- 3A: micro bubbles
- 4: suction port
- 4A: gas feeding pipe
- 5: gas (air)
- 6: Outlet
- 7: Micro bubble generating device (pressurizing and Depressurizing system)
- 8A: first pressurizing tank
- 8B: second pressurizing tank
- 9: depressurizing part
- 10: Micro-nano bubble processing device
- MB: Micro bubbles
- 11: Boiled eggs with eggshells
- 11a: the part of bubbles
- 11b: white
- 11c: yolk
- 12: plastic bag
- 13: plate-shaped konnyaku
- 13': seasoned plate-shaped konnyaku
- 14: konnyaku white balls
- Aa: coloring matter
- Ha: coloring matter
- 15: sliced konnyaku
- 16: cooked sliced konnyaku (konnyakusteak)
- 16a: brown color by burning
- 17: konnyaku jerky
- 18: konnyaku gummi.
- 20: boiled potatoes
- 21: seasoned potatoes with skin not peeled off
- 22: salt butter
- 23: raw squid
- 24: plastic container (Tupperware)
- 40: Micro-nano bubble processing device (test plant)
- 41: carrier
- 42: pump
- 43: tank
- 44: water absorbing pipe
- 45: water discharging pipe
- 46: air hose
- 47: air filter
- 48: control board
- 49: casters
- 50: take-out port

## Claims

1. A liquid seasoning **characterized in that** it is mixed with water having minute bubbles generated with a micro-nano bubble generating device, or a liquid seasoning **characterised in that** it has minute bubbles generated with a micro-nano bubble generating device.

2. A liquid seasoning as set forth in claim 1 **characterized in that** the liquid seasoning is subjected to a micro-nano bubble processing and then subjected to sterilization by heating, applying ultraviolet, and so on.

3. A liquid seasoning as set forth in claim 1 wherein minute bubbles are generated by use of a nitrogen gas in place of air.

4. A method of seasoning food **characterized in that** the liquid seasoning as set forth in any one of claims 1 through 3 is employed.

5. A method of seasoning food **characterized in that** food is soaked in or subjected to applying of the liquid seasoning as set forth in any one of claims 1 through 3, and then left intact for several hours or several days.

6. A method of seasoning food such as boiled eggs with or without eggshells, konnyaku, heated vegetables, such as, potatoes, bamboo shoots, white radish, taros, onions, lotus roots, Japanese butterbur, raw fish and shellfish, meat, bean curd, aloe, and nata de coco, **characterized in that** food is soaked in or subjected to applying of the liquid seasoning as set forth in any one of claims 1 through 3, and then left intact for several hours or several days.

7. A method of seasoning food **characterized in that** raw eggs with eggshells, konnyaku, or, raw vegetables, such as potatoes, bamboo shoots, white radish, taros, onions, lotus roots, or, Japanese butterbur, together with the liquid seasoning as set forth in any one of claims 1 through 3 are placed in a bag and heated for from several minutes through several hours, and then left intact for from several dozens of minutes through several days.

8. A method of manufacturing seasoned boiled eggs with eggshells as set forth in claim6 or 7 wherein boiled or raw eggs and the liquid seasoning are placed in a container or a bag and the container or bag is then exhausted of air, or the liquid seasoning is pressurized and placed in the container or bag.

9. A method of seasoning food as set forth in claim 2, 3, or 4 wherein the liquid seasoning contains: tastes presenting component such as tastes of salt, soy sauce, miso, curry, garlic, ginger, Japanese soup stock, dried bonito shavings flavor, Japanese Oden dish, Japanese horseradish, red pepper, Korean kimchi, butter, cheese, chicken, beef, roast, shrimp, lobster, crab, and scallop, and chili added flavor, for example, ethnic dish flavor, chinese dish flavor, etc.,; components for preference, such as flavor tastes (flavors), for example, tastes of green tea, coffee, kobucha (a hot drink made with shredded or powdered kelp), vanilla, strawberry, orange, mango, lemon, grape, perilla (beefsteak leaf), mint, chocolate, and melon; or nutritious components, such as DHA, EPA, minerals such as calcium or iodine, various vitamins, amino acids, or, collagen; alcohol such as brandy, wine, Japanese sake; and coloring matters, and a small amount of oils and fats.

10. A method of processing a liquid beverage wherein a liquid beverage such as milk, soybean milk, or juice is subjected to nano-processing and used as a liquid seasoning or, a beverage, as it is.

11. A colored konnyaku white ball provided by that a white and small-sized round konnyaku is soaked in a liquid seasoning of sweetness added with various coloring matters for from 2 through 10 hours, so that the konnyaku white ball is wholly impregnated with sweetness and coloring matters.

12. Konnyakusteak **characterized in that** a block of konnyaku is soaked in a liquid seasoning mainly containing soy sauce and Japanese soup stock for 1 through 10 hours and cut in rectangles and griddled to be browned.

13. Konnyaku jerky or konnyaku gummi **characterized in that** a block of konnyaku is soaked in a liquid seasoning mainly containing soy sauce and Japanese soup stock for 1 through 10 hours and cut in rectangles and dried.

14. Oden dish which contains materials for oden such as radish, boiled eggs without eggshells, konnyaku, and fried bean curd, the materials being soaked in a thin-tasted liquid seasoning mixing therein soy sauce, Japanese soup stock, and dried bonito shavings flavor, the oden dish in this form being on the market and eatable when warmed up.

15. Food subjected to seasoning or seasoning before cooking, such as seasoning before cooking for meat, seasoning for dried fish, seasoning before cooking, and seasoning for boiled shellfish.

16. A micro-nano bubble processing device comprising a carrier having a pump and a tank, the pump and the tank connecting through a water absorbing pipe and a water discharging pipe, an utmost end of the water discharging pipe being connected to a part of a micro bubble generating device nearer the front side, an air hose 46 being connected to a root of the micro bubble generating device 3, and a root of the air hose being connected to an air filter.

17. A micro-nano bubble processing device as set forth in claim 16 wherein the air filter employs a sterilizing filter.

18. A micro-nano bubble processing device as set forth in claim 15 or 17 wherein the tank is provided with a dual structure so that a cooling water circulates on the external part.
